# EUROPEAN PATENT APPLICATION

(11) **EP 1 918 337 A1**
(43) Date of publication of application: **07.05.2008**
(21) Application number: 07021297.2
(22) Date of filing: 31.10.2007
(51) Int. Cl.: C09D 11/00, C09D 11/10

(54) **Ink set**

(30) Priority: 02.11.2006 JP 2006298601; 26.06.2007 JP 2007167252
(71) Applicant: Seiko Epson Corporation, Tokyo 160-0811 (JP)
(72) Inventor: Nakano, Keitaro, Suwa-shi Nagano-ken 392-8502 (JP); Oyanagi, Takashi, Suwa-shi Nagano-ken 392-8502 (JP); Takemoto, Kiyohiko, Suwa-shi Nagano-ken 392-8502 (JP); Nakazawa, Chiyoshige, Suwa-shi Nagano-ken 392-8502 (JP)
(74) Representative: Grünecker, Kinkeldey, Stockmair & Schwanhäusser Anwaltssozietät

(57) **Abstract**

The present invention provides an ink set comprising a plurality of ink compositions including: an ink composition A containing at least a polymerizable compound and a photopolymerization initiator; and an ink composition B containing at least a polymerizable group, wherein each ink composition is not curable by itself.

## Description

### FIELD OF THE INVENTION

The present invention relates to an ink set which is curable with light such as ultraviolet light. More specifically, the present invention relates to an ink set comprising a plurality of inks and having high curability and excellent storage stability.

### BACKGROUND OF THE INVENTION

The inkjet recording method is a printing method of flying an ink composition in the form of small droplets and attaching it onto a recording medium such as paper, thereby performing the printing. This inkjet recording method is characterized in that a high-resolution high-quality image can be printed at a high speed. The ink composition used in the inkjet recording method generally comprises an aqueous solvent as the main component and contains a coloring component and a wetting agent such as glycerin for the purpose of preventing clogging.
Meanwhile, in the case of performing the printing on a recording medium such as paper into which the aqueous ink composition can hardly penetrate, fabrics, and a metal, plastic or like material not allowing for penetration, for example, a plate or film produced from a resin (e.g., phenol, melamine, vinyl chloride, acryl, polycarbonate), the ink composition is required to contain a component capable of bringing about stable fixing of a coloring material on the recording medium.

To meet such a requirement, a photocurable inkjet ink comprising a coloring material, a photocuring agent (radical polymerizable compound), a (photoradical) polymerization initiator and the like is disclosed (see, for example, Patent Document 1). This ink is supposed to enable preventing blurring of the ink on the recording medium and improving the image quality.
Also, for improving the storage stability of ink, a two-component inkjet recording ink has been disclosed (see, for example, Patent Document 2).

| | |
|---|---|
| Patent Document 1: | U.S. Patent 5,623,001 |
| Patent Document 2: | JP-A-8-218018 |

### SUMMARY OF THE INVENTION

However, even in the case of a two-component inkjet recording ink, when it is a solvent-free type, a polymerizable compound and a photopolymerization initiator are inevitably contained in one of the ink compositions and there is a fear that a curing reaction may proceed during the storage.
An object of the present invention is to overcome the drawbacks of conventional techniques and provide an ink set comprising a plurality of inks excellent in the storage stability as well as in the image curability.
Other objects and effects of the invention will become apparent from the following description.

The present inventors have continuously made intensive studies and succeeded in attaining the object above by employing the following constructions, and the present invention has been accomplished.
That is, the present invention is as follows.
(1) An ink set comprising a plurality of ink compositions including:
   an ink composition A containing at least a polymerizable compound and a photopolymerization initiator; and
   an ink composition B containing at least a polymerizable compound,
   wherein each ink composition is not curable by itself.
(2) The ink set as described in (1), wherein the ink composition B contains no photopolymerization initiator.
(3) The ink set as described in (1) or (2), wherein the polymerizable compound contained in the ink composition A and the polymerizable compound contained in the ink composition B are copolymerizable with each other.
(4) The ink set as described in any one of (1) to (3), wherein the polymerizable compound contained in the ink composition A is not polymerizable in the presence of the photopolymerization initiator.
(5) The ink set as described in any one of (1) to (4), wherein the polymerizable compounds are radically polymerizable.
(6) The ink set as described in (4) or (5), wherein the polymerizable compound contained in the ink composition A is an allyl group-containing compound.
(7) The ink set as described in (6), wherein the polymerizable compound contained in the ink composition A comprises allyl glycol and/or trimethylolpropane diallyl ether.
(8) The ink set as described in any one of (1) to (7), wherein the polymerizable compound contained in the ink composition B contains a dendritic polymer.
(9) The ink set as described in (8), wherein the dendritic polymer is a hyperbranched polymer and/or a dendrimer.
(10) The ink set as described in any one of (1) to (9), wherein at least either one of the ink composition A and the ink composition B contains a coloring material.
(11) A recording method using the ink set described in any one of (1) to (10).

The ink set of the present invention is an ink set comprising a plurality of ink compositions, including an ink composition A containing at least a polymerizable compound and a photopolymerization initiator and an ink composition B containing at least a polymerizable compound,
wherein each ink composition is not curable by itself. By virtue of these characteristic features, an ink set having high image curability and excellent storage stability can be provided.

### DETAILED DESCRIPTION OF THE INVENTION

The ink set of the present invention is described in detail below.
The ink set of the present invention comprises a plurality of ink compositions, wherein an ink composition A contains at least a polymerizable compound and a photopolymerization initiator and an ink composition B contains at least a polymerizable compound.

The ink composition A used in the ink set of the present invention is described below.
In the ink set of the present invention, a photopolymerization initiator for radical polymerization or cationic polymerization is preferably used as the photopolymerization initiator contained in the ink composition A.
The photopolymerization initiator for use in the present invention is a compound which undergoes a chemical change through the action of light or interaction with the electronically excited state of a sensitizing dye and produces at least one species out of a radical, an acid and a base.
A photopolymerization initiator having sensitivity to the actinic ray irradiated, such as ultraviolet ray at 400 to 200 nm, far ultraviolet ray, g-line, h-line, i-line, KrF excimer laser light, ArF excimer laser light, electron beam, X-ray, molecular beam or ion beam, may be appropriately selected and used.

As for the specific photopolymerization initiator, those known to one skilled in the art can be used without limitation. Many specific examples thereof are described in Bruce M. Monroe et al., Chemical Revue, 93, 435 (1993); R.S. Davidson, Journal of Photochemistry and biology, A: Chemistry, 73, 81 (1993); J.P. Faussier, "Photoinitiated Polymerization-Theory and Applications" of Rapra Review, Vol. 9, Report, Rapra Technology (1998); and M. Tsunooka et al., Prog. Polym. Sci., 21, 1 (1996). Also, many compounds used in a chemical-amplification photoresist or for photocationic polymerization are described in JOEM (compiler), Imaging Yo Yuki Zairyou (Organic Materials for Imaging), pp. 187-192, Bun-Shin Shuppan (1993). Furthermore, compounds capable of oxidatively or reductively causing bond cleavage through interaction with the electronically excited state of a sensitizing dye are also known and described, for example, in F.D. Saeva, Topics in Current Chemistry, 156, 59 (1990), G.G. Maslak, Topics in Current Chemistry, 168, 1 (1993), H.B. Shuster et al., JACS, 112, 6329 (1990), and I.D.F. Eaton et al., JACS, 102, 3298 (1980).

Preferred examples of the photopolymerization initiator include (a) aromatic ketones, (b) an aromatic onium salt compound, (c) an organic peroxide, (d) a hexaarylbiimidazole compound, (e) a ketoxime ester compound, (f) a borate compound, (g) an azinium compound, (h) a metallocene compound, (i) an active ester compound, and (j) a carbon-halogen bond-containing compound.

Preferred examples of the (a) aromatic ketones include compounds having a benzophenone or thioxanthone skeleton described in J.P. Fouassier and J.F. Rabek, Radiation Curing in Polymer Science and Technology, pp. 77-117 (1993).
More preferred examples of the (a) aromatic ketones include α-thiobenzophenone compounds described in JP-B-47-6416 (the term "JP-B" as used herein means an "examined Japanese patent publication"), benzoin ether compounds described in JP-B-47-3981, α-substituted benzoin compounds described in JP-B-47-22326, benzoin derivatives described in JP-B-47-23664, aroylphosphonic esters described in JP-A-57-30704, dialkoxybenzophenones described in JP-B-60-26483, benzoin ethers described in JP-B-60-26403 and JP-A-62-81345, α-aminobenzophenones described in JP-B-1-34242, U.S. Patent 4,318,791 and EP-A-0284561, p-di(dimethylaminobenzoyl)-benzene described in JP-A-2-211452, thio-substituted aromatic ketones described in JP-A-61-194062, acylphosphine sulfides described in JP-B-2-9597, acylphosphines described in JP-B-2-9596, thioxanthones described in JP-B-63-61950, and coumarins described in JP-B-59-42864.

The (b) aromatic onium salt include aromatic onium salts of Groups V, VI and VII elements of the Periodic Table, specifically, N, P, As, Sb, Bi, O, S, Se, Te and I. Examples of the aromatic onium salt which is suitably used include iodonium salts described in European Patent 104143, U.S. Patent 4,837,124, JP-A-2-150848 and JP-A-2-96514, sulfonium salts described in European Patents 370693, 233567, 297443, 297442, 279210 and 422570, and U.S. Patents 3, 902, 7.44, 4,933,377, 4, 760, 013, 4, 734, 444 and 2,833,827, diazonium salts (e.g., benzenediazonium which may have a substituent), diazonium salt resins (e.g., formaldehyde resin of diazodiphenylamine), N-alkoxypyridinium salts (e.g., those described in U.S. Patent 4,743,528, JP-A-63-138345, JP-A-63-142345, JP-A-63-142346 and JP-B-46-42363, specifically, 1-methoxy-4-phenylpyridinium tetrafluoroborate), and compounds described in JP-B-52-147277, JP-B-52-14278 and JP-B-52-14279.

The (c) organic peroxide includes almost all organic compounds having one or more oxygen-oxygen bonds within the molecule, but preferred examples thereof include a peroxide ester-based compound such as 3,3',4,4'-tetra-(tert-butylperoxycarbonyl)benzophenone, 3,3',4, 4'-tetra-(tert-amylperoxycarbonyl)benzophenone, 3,3',4,4'-tetra-(tert-hexylperoxycarbonyl)benzophenone, 3, 3', 4, 4'-tetra-(tert-octylperoxycarbonyl)benzophanone, 3,3',4,4'--tetra-(cumylperoxycarborryl)benzophenone, 3,3',4,4'-tetra-(p-isopropylcumylparoxycarbonyl)benzophenone and di-tert-butyldiperoxy isophthalate.

Examples of the (d) hexaarylbiimidazole compound include lophine dimers described in JP-B-45-37377 and JP-B-44-86516, such as 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole and 2,2'-bis(o-trifluoromethylphenyl)-4,4',5,5'-tetraphenylbiimidazole.

Examples of the (e) ketoxime ester compound include 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-p-toluenesulfonyloxyiminobutan-2-one and 2-ethoxycarbonyloxyimino-1-phenylpropan-1-one.

Examples of the (f) borate salt, which is another example of the photopolymerization initiator for use in the present invention, include compounds described in U.S. Patents 3,567,453 and 4,343,891, and European Patents 109772 and 109773.
Examples of the (g) azinium salt compound, which is still another example of the photopolymerization initiator, include compounds having an N-O bond described in JP-A-63-138345, JP-A-63-142345, JP-A-63-142346, JP-A-63-143537 and JP-B-46-42363.

Examples of the (h) metallocene compound, which is yet still another example of the photopolymerization initiator, include titanocene compounds described in JP-A-59-152396, JP-A-61-151197, JP-A-63-41484, JP-A-2-249 and JP-A-2-4705, and iron-arene complexes described in JP-A-1-304453 and JP-A-1-152109.

Specific examples of the titanocene compound include dicyclopentadienyl-Ti-dichloride, dicyclopentadienyl-Ti-bisphenyl, dicyclopentadienyl-Ti-bis-2,3,4,5,6-pentafluorophen-1-yl, dicyclopentadienyl-Ti-bis-2,3,5,6-tetrafluorophen-1-yl, dicyclopentadienyl-Ti-bis-2,4,6-trifluorophen-1-yl, dicyclopentadienyl-Ti-bis-2,6-difluorophen-1-yl, dicyclopentadienyl-Ti--bis-2,4-difluorophen-1-yl, dimethylcyclopentadienyl-Ti-bis-2,3,4,5,6-pentafluorophen-1-yl, dimethylcyclopentadienyl-Ti-bis-2,3,5,6-tetrafluorophen-1-yl, dimethylcyclopentadienyl-Ti-bis-2,4-difluorophen-1-yl, bis-(cyclopentadienyl)-bis(2,6-difluoro-3-(pyr-1-yl)phenyl)-titanium, bis(cyclopentadienyl)bis[2,6-difluoro--3-(methylsulfonamido)phenyl]titanium and bis(cyclopentadienyl)bis-[2,6-difluoro-3-(N-butylpivaloylamino)phenyl]titanium.

Examples of the (i) active ester compound include nitrobenzyl ester compounds described in European Patents 0290750, 046083, 156153, 271851 and 0388343, U.S. Patents 3,901,710 and 4,181,531, JP-A-60-198538 and JP-A-53-133022, iminosulfonate compounds described in European Patents 0199672, 84515, 199672, 044115 and 0101122, U.S. Patents 4,618,564, 4,371,605 and 4,431,774, JP-A-64-18143, JP-A-2-245756 and JP-A-4-365048, and compounds described in JP-B-62-6223, JP-B-63-14340 and JP-A-59-174831.

Preferred examples of the (j) carbon-halogen bond-containing compound include compounds described in Wakabayashi et al., Bull. Chem. Soc. Japan, 42, 2924 (1969), British Patent 1388492, JP-A-53-133428, and German Patent 3337024.

Other examples include compounds described in F.C. Schaefer et al., J. Org. Chem. , 29, 1527 (1964), JP-A-62-58241, JP-A-5-281728, German Patents 2, 641, 100, 3,333,450, 3, 021, 590 and 3, 021, 599.

Furthermore, photoradical polymerization initiators available under the trade names of Vicure 10 and 30 (produced by Stauffer Chemical); Irgacure 127, 184, 500, 651, 2959, 907, 369, 379, 754, 1700, 1800, 1850 and 819, OXE01, Darocur 1173, TPO and ITX (produced by Ciba Specialty Chemicals); Quantacure CTX (produced by Aceto Chemical); Kayacure DETX-S (produced by Nippon Kayaku Co., Ltd.); and ESACURE KIP150 (produced by Lamberti) may also be used.

In the ink set of the present invention, the polymerizable compound used in the ink composition A is characterized by being hardly polymerizable even in the presence of a photopolymerization initiator. More specifically, the polymerizable compound used in the ink composition A is hardly polymerizable even in the presence of a radial or active ion species (e.g., cation, anion) and when mixed with the ink composition B, the polymerization reaction proceeds for the first time to effect curing. Examples of the combination include an ink set where a radical polymerizable compound and a radical polymerization initiator are incorporated in the ink composition A and a radical polymerizable compound is incorporated in the ink composition B, an ink set where a cationic polymerizable compound and a cationic polymerization initiator are incorporated in the ink composition A and a cationic polymerizable compound is incorporated in the ink composition B, and an ink set where a radical polymerizable compound and a cationic polymerization initiator are incorporated in the ink composition A and a cationic polymerizable compound and a radical polymerization initiator are incorporated in the ink composition B. Also, when the polymerization process is radical polymerization, a compound which is not curable by itself upon light irradiation but is curable through a copolymerization reaction with another polymerizable compound, such as an allyl group-containing compound, is preferably used. Specific examples of such a compound include allyl glycol and/or trimethylolpropane diallyl ether.

The allyl group-containing compound which is the polymerizable compound for use in the present invention is a generic term of compounds having a 2-propenyl structure (-CH₂CH-CH₂) . The 2-propenyl group is also called an allyl group and is indicated as a trivial name in the IUPAC nomenclature.
Examples of the allyl group-containing compound include allyl glycol (produced by Nippon Nyukazai Co., Ltd.), trimethylolpropane diallyl ether, pentaerythritol triallyl ether, glycerin monoallyl ether (all produced by Daiso Co., Ltd.), and allyl group-containing polyoxyalkylene compounds having trade names of UNIOX, UNILUBE, POLYCERIN and UNISAFE (produced by NOF Corp.).

The ink composition B for use in the ink set of the present invention is described below.
The ink composition B contains at least a polymerizable compound. As for the polymerizable compound contained in the ink composition B, similarly to that used in the ink composition A, known and commonly employed polymerizable compounds may be used, but a dendritic polymer is preferred. The dendritic polymers can be roughly classified into the following 6 structures (see, Keigo Aoi and Masaaki Kakimoto (supervisors), Dendritic Kobunshi -Tabunki Kozo ga Hirogeru Koukinouka no Sekai- (Dendritic Polymers -World of High Functionalization Diversified by Multibranched Structures-), NTS Inc.).
I. Dendrimer
II. Linear dendritic polymer
III. Dendrigraft polymer
IV. Hyperbranched polymer
V. Star hyperbranched polymer
VI. Hypergrafted polymer

Of these, I to III have a degree of branching (DB) of 1 and have a defect-free structure, whereas IV to VI have a random branch structure which may contain a defect. In particular, the dendrimer allows reactive functional groups to locate on the outermost surface thereof at a high density in a concentrated manner as compared with a linear polymer generally used and is highly promising as a functional polymer material. Furthermore, the hyperbranched polymer, dendrigraft polymer and hypergrafted polymer also allow introduction of a large number of reactive functional groups into the outermost surface thereof, though not so many as the dendrimer, and are excellent in the curability.

Unlike conventional linear polymers or branched polymers, these dendritic polymers are highly branched by three-dimensionally repeating a branched structure, so that the viscosity can be kept low as compared with a linear polymer having the same molecular weight.

The synthesis method of the dendrimer which can be used in the present invention includes a divergent method where the synthesis proceeds from the center to the outside, and a convergent method where the synthesis proceeds from the outside to the center.

The dendrimer, hyperbranched polymer, dendrigraft polymer and hypergrafted polymer usable in the present invention are preferably a polymer being solid at room temperature and having a number average molecular weight of 1,000 to 100,000, more preferably from 2,000 to 50,000. If the polymer is not solid at room temperature, the preservability of the image formed is worsened. If the molecular weight is less than the range above, the fixed image becomes brittle, whereas if the molecular weight exceeds the range above, the ink comes to have an excessively high viscosity even when the amount added of the polymer is decreased, and this is impractical in view of ejection property.

The dendrimer, hyperbranched polymer, dendrigraft polymer and hypergrafted polymer usable in the present invention are preferably a dendrimer, a hyperbranched polymer, a dendrigraft polymer and a hypergrafted polymer each having a radical polymerizable functional group on the outermost surface. By virtue of the radical polymerizable structure on the outermost surface, the polymerization reaction swiftly proceeds.

Examples of the polymer having a dendrimer structure include an amidoamine-based dendrimer (see, U.S. Patents 4, 507, 466, 4, 558, 120, 4, 568, 737, 4, 587, 329, 4, 631, 337 and 4,694,064) and a phenyl ether-based dendrimer (see, U.S. Patent 5,041,516 and Journal of American Chemistry, Vol. 112, pp. 7638-7647 (1990)). As for the amidoamine-based dendrimer, a dendrimer having a terminal amino group and a carboxylic acid methyl ester group is commercially available as "Starburst™ (PAMAM)" from Aldrich. Also, the terminal amino group of the amidoamine-based dendrimer may be reacted with various acrylic acid derivatives and methacrylic acid derivatives to synthesize an amidoamine-based dendrimer having a corresponding terminal, and these dendrimers may be used.

The acrylic acid derivative and methacrylic acid derivative which can be utilized include, but are not limited to, acrylic or methacrylic acid alkyl esters of methyl, ethyl, n-butyl, tert-butyl, cyclohexyl, palmityl, stearyl and the like, and acrylic or methacrylic acid alkylamides of acrylic acid amide, isopropylamide and the like.

As for the phenyl ether-based dendrimer, various compounds are described, for example, in Journal of American Chemistry, Vol. 112, pp. 7638-7647 (1990), supra, and it is reported that, for example, a 3,5-dihydroxybenzyl alcohol is used and reacted with 3,5-diphenoxybenzyl bromide to synthesize a second-generation benzyl alcohol, this alcohol after converting its OH group into Br by using CBr₄ and triphenylphosphine is similarly reacted with a 3,5-dihydroxybenzyl alcohol to synthesize a next-generation benzyl alcohol, and these reactions are thereafter repeated to synthesize a desired dendrimer. Also in the phenyl ether-based dendrimer, the terminal can be substituted by those having various chemical structures in place of the terminal benzyl ether bond. For example, in the synthesis of the dendrimer described in Journal of American Chemistry, Vol. 112, *supra*, when various alkyl halides are used in place of the benzyl bromide, a phenyl ether-based dendrimer with the terminal structure having a corresponding alkyl group can be obtained. In addition, polyamine-based dendrimers (see, Macromol. Symp., 77, 21 (1994)) and derivatives obtained by modifying the terminal group thereof can be used.

Examples of the hyperbranched polymer which can be used include hyperbranched polyethylene glycol. The hyperbranched polymer is a polymer obtained by synthesizing a target polymer in one step using a monomer having, within one molecule, two or more single-species reaction points corresponding to branch portions and only one different-species reaction point corresponding to the connecting portion (see, Non-Patent Document 3 (Macromolecules, Vol. 29, pp. 3831-3838 (1996))). Examples of the monomer for the hyperbranched polymer include a 3,5-dihydroxybenzoic acid derivative. As for the production example of the hyperbranched polymer, dibutyltin diacetate and methyl 3,5-bis((8'-hydroxy-3',6'-dioxaoctyl)oxy)benzoate which is a hydrolysate of methyl 3,5-bis((8'-(tert-butyldiphenyl-siloxy)-3',6'-dioxaoctyl)oxy)benzoate obtained from 1-bromo-B-(tert-butyldiphenylsiloxy)-3,6-dioxaoctane and methyl 3,5-dihydroxybenzoate are heated in a nitrogen atmosphere, whereby poly[bis(triethylene glycol) benzoate] as a hyperbranched polymer can be synthesized.

In the case of using a 3,5-dihydroxybenzoic acid, the terminal group of the hyperbranched polymer becomes a hydroxyl group and therefore, hyperbranched polymers having various terminal groups can be synthesized using an appropriate alkyl halide for this hydroxyl group.

The characteristics of a monodisperse polymer, hyperbranched polymer or the like having a dendrimer structure are governed by the chemical structure of the main chain and the chemical structure of its terminal group. The characteristics are greatly varied particularly by the difference of terminal group or substituent in the chemical structure. In particular, a dendrimer having a polymerizable group at the terminal provides a high gelling effect after photoreaction because of its reactivity and therefore, is useful. The polymerizable group-containing dendrimer is obtained by chemically modifying the terminal of a polymer having a basic atom group at the terminal, such as amino group, substituted amino group or hydroxyl group, with a polymerizable group-containing compound.

For example, the polymerizable group-containing dendrimer is synthesized by adding an isocyanate group-containing vinyl compound or the like to a polyfunctional compound obtained by the Michael addition of an active hydrogen-containing (meth)acrylate-based compound to an amino-based dendrimer. Also, the dendrimer having a polymerizable group at the terminal is obtained by reacting (meth)acrylic acid chloride or the like with an amino-based dendrimer. The vinyl compound which gives such a polymerizable group includes a compound having a radical polymerizable ethylenically unsaturated bond, and examples thereof include an unsaturated carboxylic acid such as acrylic acid, methacrylic acid, itaconic acid, crotonic acid, isocrotonic acid and maleic acid, a salt thereof, and various radical polymerizable ethylenically unsaturated bond-containing compounds described later.

The polymerizable group further includes a terminal group having a cationic polymerizable group, and the cationic polymerizable group can be introduced by reacting the amino-based dendrimer described above with a compound having a polymerizable group of which polymerization occurs by cationic polymerization, such as epoxy group and oxetanyl group, for example, with cyclic ether compounds (e.g., oxiranes, oxetanes), alicyclic polyepoxides, polyglycidyl esters of polybasic acid, or polyglycidyl ethers of polyhydric alcohol. For example, chloromethyloxirane is reacted with the amino-based dendrimer, whereby an epoxy-type cationic polymerizable group can be introduced. In addition, the terminal group includes a cationic polymerizable group selected from styrene derivatives, vinyl naphthalene derivatives, vinyl ethers, N-vinyl compounds and the like.

In the present invention, one of these dendrimers, hyperbranched polymers, dendrigraft polymers and hypergrafted polymers may be used alone, or such a polymer may be used in combination with another kind of dendrimer, hyperbranched polymer, dendrigraft polymer or hypergrafted polymer. Specific examples of the dendritic polymer include STAR-501, STAR-502 and V#1000 (all produced by Osaka Organic Chemical Industry, Ltd.).

In the ink composition B of the ink set of the present invention, the amount of the dendritic polymer added is preferably on the order of 3 to 30 mass% and within this range, the suitability as an ink set can be maintained. The amount added is more preferably on the order of 5 to 25 mass%.
If the amount of the dendritic polymer added is less than 3 mass%, the curability as an ink set is insufficient, whereas if it exceeds 30 mass%, there may arise a problem in the viscosity, dispersion stability, storage stability and the like of the ink composition.

In the ink set of the present invention, the polymerizable compound used in the ink composition B is not particularly limited as long as it is a compound which is curable resulting from a polymerization reaction brought about upon application of some energy, and the compound may be used irrespective of whether it is a monomer, an oligomer or a polymer, but various polymerizable monomers known as a photocationic polymerizable monomer or photoradical polymerizable monomer, which can bring about a polymerization reaction by the effect of an initiating species generated from a photopolymerization initiator, are particularly preferred, in addition to the above-described dendritic polymer.
One species of the polymerizable compound or a mixture of several species may be used for the purpose of adjusting the reaction rate, physical properties of ink or cured film, and the like. Also, the polymerizable compound may be a monofunctional compound or a polyfunctional compound.

Examples of the cationic polymerizable monomer used as the polymerizable compound in the present invention include epoxy compounds, vinyl ether compounds and oxetane compounds described in JP-A-6-9714, JP-A-2001-31892, JP-A-2001-40068, JP-A-2001-55507, JP-A-2001-310938, JP-A-2001-310937 and JP-A-2001-220526.

The epoxy compound includes an aromatic epoxide, alicyclic epoxide and the like.
Examples of the monofunctional epoxy compound which can be used in the present invention include phenylglycidyl ether, p-tert-butylphenylglycidyl ether, butylglycidyl ether, 2-ethylhexylglycidyl ether, allylglycidyl ether, 1,2-butylene oxide, 1,3-butadiene monoxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide and 3-vinylcyclohexene oxide.

Examples of the polyfunctional epoxy compound include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resin, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexane carboxylate, 2-(3,4-epoxycyclohexyl-5,5-spiro-3,4-epoxy)cyclohexane-meta-dioxane, bis(3,4-epoxycyclohexylmethyl)adipate, vinylcyclohexene oxide, 4-vinylepoxycyclohexane, bis(3,4-epoxy-6-methylcyclohexylmethyl)adipate, 3,4-epoxy-6-methylcyclohexyl-3',4'-epoxy-6'-methylcyclohexane carboxylate, methylenebis(3,4-epoxycyclohexane), dicyclopentadienediepoxide, di(3,4-epoxycyclohexylmethyl)ether of ethylene glycol, ethylene-bis (3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxyoctane, and 1,2,5,6-diepoxycyclooctane.
Among these epoxy compounds, an aromatic epoxide and an alicyclic epoxide are preferred in view of excellent curing rate, and an alicyclic epoxide is more preferred.

Examples of the monofunctional vinyl ether which can be used in the present invention include methyl vinyl ether, ethyl vinyl ether, propyl vinyl ether, n-butyl vinyl ether, tert-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxy ethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether and phenoxypolyethylene glycol vinyl ether.

Examples of the polyfunctional vinyl ether include divinyl ethers such as ethylene glycol divinyl ether, diethylene glycol divinyl ether, polyethylene glycol divinyl ether, propylene glycol-divinyl ether, butylene glycol divinyl ether, hexanediol divinyl ether, bisphenol A alkylene oxide divinyl ether, and bisphenol F alkylene oxide divinyl ether; and polyfunctional vinyl ethers such as trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, ethylene oxide-added trimethylolpropane trivinyl ether, propylene oxide-added trimethylolpropane trivinyl ether, ethylene oxide-added ditrimethylolpropane tetravinyl ether, propylene oxide-added ditrimethylolpropane tetravinyl ether, ethylene oxide-added pentaerythritol tetravinyl ether, propylene oxide-added pentaerythritol tetravinyl ether, ethylene oxide-added dipentaerythritol hexavinyl ether and propylene oxide-added dipentaerythritol hexavinyl ether.
As for the vinyl ether compound, a di- or tri-vinyl ether compound is preferred in view of curability, adhesion to the recording medium, and surface hardness of the image formed, and a divinyl ether compound is more preferred.

The oxetane compound as used in the present invention indicates a compound having an oxetane ring, and known oxetane compounds such as those described in JP-A-2001-220526, JP-A-2001-310937 and JP-A-2003-391217 may be arbitrarily selected and used.
The oxetane ring-containing compound which can be used in the ink composition of the present invention is preferably a compound having from 1 to 4 oxetane rings in its structure. By virtue of using such a compound, it is facilitated to keep the viscosity of the ink composition within the range ensuring good handling property, and the cured ink can exhibit high adhesion to the recording medium.

Examples of the monofunctional oxetane for use in the present invention include 3-ethyl-3-hydroxymethyloxetane, 3-(meth)allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl]phenyl ether, isobutoxymethyl(3-ethyl-3-oxetanylmethyl)ether, isobornyloxyethyl(3-ethyl-3-oxetanylmethyl)ether, isobornyl(3-ethyl-3-oxetanylmethyl)ether, 2-ethylhexyl(3-ethy-3-oxetanylmethyl)ether, ethyldiethylene glycol (3-ethyl-3-oxetanylmethyl)ether, dicyclopentadiene-(3-ethyl-3-oxetanylmethyl)ether, dicyclopentenyloxyethyl(3-ethyl-3-oxetanylmethyl)ether, dicyclopentenyl(3-ethyl-3-oxetanylmethyl)ether, tetrahydrofurfuryl(3-ethyl-3-oxetanylmethyl)ether, tetrabromophenyl(3-ethyl-3-oxetanylmethyl)ether, 2-tetrabromophenoxyethyl(3-ethyl-3-oxetanylmethyl)ether, tribromophenyl(3-ethyl-3-oxetanylmethyl) ether, 2-tribromophenoxyethyl(3-ethyl-3-oxetanylmethyl) ether, 2-hydroxyethyl(3-athyl-3-oxetanylmethyl)ether, 2-hydroxypropyl(3-ethyl-3-oxetanylmethyl)ether, butoxyethyl(3-ethyl-3-oxetanylmethyl)ether, pentachlorophenyl(3-ethyl-3-oxetanylmethyl)ether, pentabromophenyl(3-ethyl-3-oxetanylmethyl)ether and bornyl(3-ethyl-3-oxetanylmethyl)-ether.

Examples of the polyfunctional oxetane include polyfunctional oxetanes such as 3,7-bis(3-oxetanyl)-5-oxanonane, 3,3'-(1,3-(2-methylenyl)propanediyl-bis(oxymethylene))-bis(3-ethyloxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl)ether, dicyclopentenyl-bis(3-ethyl-3-oxetanylmethyl)ether, triethylene glycol bis(3-ethyl-3-oxetanylmethyl)ether, tetraethylene glycol bis(3-ethyl-3-oxetanylmethyl)ether, tricyclodecanediyldimethylene (3-ethyl-3-oxetanylmethyl)ether, trimethylolpropane-tris(3-ethyl-3-oxetanylmethyl)ether, 1,4-bis(3-ethyl-3-oxetanylmethyl)butane, 1,6-bis(3-ethyl-3-oxetanylmethoxy)hexane, pentaerythritol-tris(3-ethyl-3-oxetanylmethyl)ether, pentaerythritol-tetrakis(3-ethyl-3-oxetanylmethyl)ether, polyethylene glycol bis(3-ethyl-3-oxetanylmethyl)ether, dipentaerythritol-hexakis(3-ethyl-3-oxetanylmethyl)ether, dipentaerythritol-pentakis(3-ethyl-3-oxetanylmethyl)ether, dipentaerythritol-tetrakis(3-ethyl-3-oxetanylmethyl)ether, caprolactone-modified dipentaerythritol-hexakis(3-ethyl-3-oxetanylmethyl)ether, caprolactone-modified dipentaerythritol-pentakis(3-ethyl-3-oxetanylmethyl)ether, ditrimethylolpropane-tetrakis(3-ethyl-3-oxetanylmethyl)ether, EO-modified bisphenol A bis(3-ethyl-3-oxetanylmethyl)ether, PO-modified bisphenol A bis(3-ethyl-3-oxetanylmethyl)ether, EO-modified hydrogenated bisphenol A bis(3-ethyl-3-oxetanylmethyl)ether, PO-modified hydrogenated bisphenol A bis(3-ethyl-3-oxetanylmethyl)ethex, and EO-modified bisphenol F bis(3-ethyl-3-oxetanylmethyl)ether.

Such an oxetane ring-containing compound is described in detail in JP-A-2003-341217, paragraphs [0021] to [0084], and the compounds described therein can be suitably used also in the present invention.
Among the oxetane compounds for use in the present invention, a compound having 1 or 2 oxetane rings is preferred in view of viscosity and tackiness of the ink composition.

In the ink composition of the present invention, only one of these polymerizable compounds may be used or two or more members thereof may be used in combination, but from the standpoint of effectively suppressing the shrinkage at curing of the ink, at least one oxetane compound and at least one compound selected from epoxy compounds and vinyl ether compounds are preferably used in combination.

In the present invention, various known radical polymerizable monomers capable of causing a polymerization reaction by the effect of an initiating species generated from a photoradical initiator are also preferably used as the polymerizable compound.
Examples of the radical polymerizable monomer include (meth)acrylates, (meth)acrylamides and aromatic vinyls. Incidentally, when both or either one of "acrylate" and "methacrylate" are(is) indicated, the term "(meth)acrylate" is sometimes used, and when both or either one of "acryl" and "methacryl" are(is) indicated, the term "(meth)acryl" is sometimes used.

Examples of the (meth)acrylate for use in the present invention include the followings.
Examples of the monofunctional (meth)acrylate include hexyl (meth)acrylate, 2-ethylhexyl (meth)acrylate, tert-octyl (meth)acrylate, isoamyl (meth)acrylate, decyl (meth)-acrylate, isodecyl (meth)acrylate, stearyl (meth)acrylate, isostearyl (meth)acrylate, cyclohexyl (meth)acrylate, 4-n-butylcyclohexyl (meth) acrylate, bornyl (meth)acrylate, isobornyl (meth)acrylate, benzyl (meth)acrylate, 2-ethylhexyl diglycol (meth)acrylate, butoxyethyl (meth)acrylate, 2-chloroethyl (meth)acrylate, 4-bromobutyl (meth)acrylate, cyanoethyl (meth)acrylate, benzyl (meth)acrylate, butoxymethyl (meth)acrylate, 3-methoxybutyl (meth)acrylate, alkoxymethyl (meth)acrylate, alkoxyethyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)-acrylate, 4-butylphenyl (meth)acrylate, phenyl (meth)acrylate, 2, 4, 5-tetramethylphenyl (meth) acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)-acrylate, glycidyloxypropyl (meth)acrylate, tetrahydrofurfuryl (meth)acrylate, hydroxyalkyl (meth)acrylate, 2-hydroxyethyl (meth)acrylate, 3-hydroxypropyl (meth)acrylate, 2-hydroxypropyl (meth)acrylate, 2-hydroxybutyl (meth)-acrylate, 4-hydroxybutyl (meth)acrylate, 3-hydroxypropyl (meth)acrylate, dimethylaminoethyl (meth)acrylate, diethylaminoethyl (meth)acrylate, dimethylaminopropyl (meth)-acrylate, diethylaminopropyl (meth)acrylate, trimethoxysilylpropyl (meth)acrylate, trimethylsilylpropyl (meth)-acrylate, polyethylene oxide monomethylether (meth)acrylate, oligoethylene oxide monomethylether (meth)acrylate, polyethylene oxide (meth)acrylate, oligoethylene oxide (meth)acrylate, oligoethylene oxide monoalkylether (meth)-acrylate, polyethylene oxide monoalkylether (meth)acrylate, dipropylene glycol (meth)acrylate, polypropylene oxide monoalkylether (meth)acrylate, oligopropylene oxide monoalkylether (meth)acrylate, 2-methacryloyloxyethyl-succinic acid, 2-methacryloyloxyhexahydrophthalic acid, 2-methacryloyloxyethyl-2-hydroxypropyl phthalate, butoxy-diethylene glycol (meth)acrylate, trifluoroethyl (meth)acrylate, perfluorooctylethyl (meth)acrylate, 2-hydroxy-3-phenoxypropyl (meth)acrylate, EO-modified phenol (meth)acrylate, EO-modified cresol (meth)acrylate, EO-modified nonylphenol (meth)acrylate, PO-modified nonylphenol (meth)acrylate and EO-modified 2-ethylhexyl (meth) acrylate .

Specific examples of the bifunctional (meth)acrylate include 1,6-hexanediol di(meth)acrylate, 1,10-decanediol di(meth)acrylate, neopentyl glycol di(meth)acrylate, 2,4-dimethyl-1,5-pentanediol di(meth)acrylate, butylethyl-propanediol (meth)acrylate, ethoxylated cyclohexane methanol di(meth)acrylate, polyethylene glycol di(meth)acrylate, oligoethylene glycol di(meth)acrylate, ethylene glycol di(meth)acrylate, 2-ethyl-2-butyl-butanediol di(meth)acrylate, neopentyl glycol hydroxypivalate di (meth)acrylate, EO-modified bisphenol A di(meth)acrylate, bisphenol F polyethoxy di(meth)acrylate, polypropylene glycol di(meth)acrylate, oligopropylene glycol di(meth)acrylate, 1,4-butanediol di(meth)acrylate, 2-ethyl-2-butylpropanediol di(meth)acrylate, 1,9-nonane di(meth)acrylate, propoxylated ethoxylated bisphenol A di(meth)acrylate and tricyclodecane di(meth)acrylate.

Specific examples of the trifunctional (meth)acrylate include trimethylolpropane tri(meth)acrylate, trimethylolethane tri(meth)acrylate, alkylene oxide-modified tri(meth)acrylate of trimethylolpropane, pentaerythritol tri(meth)acrylate, dipentaerythritol tri(meth)acrylate, trimethylolpropane tri((meth)acryloyloxypropyl)ether, isocyanuric acid alkylene oxide-modified tri(meth)acrylate, dipentaerythritol propionate tri(meth)acrylate, tri-((meth)acryloyloxyethyl)isocyanurate, hydroxypivalaldehyde-modified dimethylolpropane tri(meth)acrylate, sorbitol tri(meth)acrylate, propoxylated trimethylolpropane tri(meth)acrylate and ethoxylated glycerin triacrylate.

Specific examples of the tetrafunctional (meth)-acrylate include pentaerythritol tetra(meth)acrylate, sorbitol tetxa(meth)acrylate, ditrimethylolpropane tetra-(meth)acrylate, dipentaerythritol propionate tetra(meth)-acrylate and ethoxylated pentaerythritol tetra(meth)-acrylate.
Specific examples of the pentafunctional (meth)-acrylate include sorbitol penta(meth)acrylate and dipentaerythritol penta(meth)acrylate.
Specific examples of the hexafunctional (meth)-acrylate include dipentaerythritol hexa (meth) acrylate, sorbitol hexa(meth)acrylate, alkylene oxide-modified hexa(meth)acrylate of phosphazene, and caprolactone-modified dipentaerythritol hexa(meth)acrylate.

Examples of the (meth)acrylamides for use in the present invention include (meth)acrylamide, N-methyl(meth)-acrylamide, N-ethyl(meth)acrylamide, N-propyl-(meth)acrylamide, N-n-butyl(meth)acrylamide, N-tert-butyl-(meth)acrylamide, N-butoxymethyl(meth)acrylamide, N-isopropyl(meth)acrylamide, N-methylol(meth)acrylamide, N,N-dimethyl(meth)acrylamide, N,N-diethyl(meth)acrylamide and (meth)acryloylmoxpholine.

Specific examples of the aromatic vinyls for use in the present invention include styrene, methylstyrene, dimethylstyrene, trimethylstyrene, ethylstyrene, isopropyl-styrene, chloromethylstyrene, methoxystyrene, acetoxy-styrene, chlorostyrene, dichlorostyrene, bromostyrene, methyl vinylbenzoate, 3-methylstyrene, 4-methylstyrene, 3-ethylstyrene, 4-ethylstyrene, 3-propylstyrene, 4-propylstyrene, 3-butylstyrene, 4-butylstyrene, 3-hexylstyrene, 4-hexylstyrene, 3-octylstyrene, 4-octylstyrene, 3-(2-ethylhexyl)styrene, 4-(2-ethylhexyl)styrene, allylstyrene, isopropenylstyrene, butenylstyrene, octenylstyrene, 4-tert-butoxycarbonylstyrene, 4-methoxystyrene and 4-tert-butoxystyrene.

Other examples of the radical polymerizable monomer for use in the present invention include vinyl esters [e.g., vinyl acetate, vinyl propionate, vinyl versatate], allyl esters [e.g., allyl acetate], halogen-containing monomers [e.g., vinylidene chloride, vinyl chloride], vinyl ethers [e.g., methyl vinyl ether, butyl vinyl ether, hexyl vinyl ether, methoxy vinyl ether, 2-ethylhexyl vinyl ether, methoxyethyl vinyl ether, cyclohexyl vinyl ether, chloroethyl vinyl ether], vinyl cyanides [e.g., (meth)acrylonitrile] and olefins [e.g., ethylene, propylene].

Among these, as the radical polymerizable monomer for use in the present invention, (meth)acrylates and (meth)acrylamides are preferred in view of curing rate, and a tetrafunctional or greater (meth)acrylate is more preferred in view of curing rate. Furthermore, in the light of viscosity of the ink composition, the above-described polyfunctional (meth)acrylate and monofunctional or bifunctional (meth)acrylate or (meth)acrylamide are preferably used in combination.

The content of the polymerizable compound in the ink composition is suitably from 50 to 95 mass%, preferably from 60 to 92 mass%, more preferably from 70 to 90 mass%, based on the entire solid content of the composition.
The monomer for use in the present invention preferably has a PII value (primary irritation index) of 2 or less.

Examples of the monofunctional monomer, bifunctional monomer and polyfunctional monomer having a PII value of 2 or less, which can be used in the present invention, are shown in Table 1 below.

**Table 1**

| Monofunctional Monomer | | |
|---|---|---|
| Material Name | Viscosity (mPa•s) | PII |
| (2-Methyl-2-ethyl-1,3-dioxolan-4-yl)methyl acrylate (MEDOL-10, Osaka organic Chemical Industry Ltd.) | 5.1 | 1.3 |
| (2-Methyl-2-isobutyl-1,3-dioxolan-4-yl)methyl acrylate (MIBDOL-10, Osaka Organic Chemical Industry Ltd.) | 5.3 | 1.0 |
| Phenoxyethyl acrylate (Vlscoat#192, Osaka Organic Chemical Industry Ltd.) | 3.3 | 1.7 |
| Isobomyl acrylate (IBXA, Osaka Organic Chemical Industry Ltd) | 2.6 | 0.6 |
| Methoxydiethylene glycol monoacrylate (Blemmer PME-100. NOF Corp.) | 2 | 0.7 |
| Acryloyl morpholine (ACMO, Kohjin Co., Ltd.) | 12 | 0.5 |

| Bifunctional Monomer | | |
|---|---|---|
| Material Name | Viscosity (mPa•s) | PII |
| Ethylene glycol dimethacrylate (Light-Ester EG, Kyoelsha Chemical Co., Ltd.) | 3 | 0.6 |
| Diethylene glycol dimethacrylate (Light-Ester 2EG, Kyoeisha Chemical Co., Ltd.) | 5 | 0.5 |
| Tripropylene glycol diacrylate (Aronix M-220, Toagosel Co., Ltd.) | 12 | 1.6 |
| 1,9-Nonanediol diacrylate (Viscoat#260, Osaka Organic Chemical Industry Ltd.) | 21 | 2.0 |
| Polyethylene glycol #400 diacrylate (NK Ester A400, Shin-Nakamura Chemical Co., Ltd.) | 58 | 0.4 |
| Tetraethylene glycol dimethacrylate (NK Ester 4G, Shin-Nakamura Chemical Co., Ltd.) | 14 | 0.5 |
| 1,6-Hexanediol dimethacrylate (NK Ester HD-N, Shin-Nakamura Chemical Co., Ltd.) | 6 | 0.5 |
| Neopentyl glycol dimethacrylate (NK Ester NPG, Shin-Nakamura Chemical Co., Ltd.) | 7 | 0.0 |
| 2-Hydroxy-1,3.dimethacryloxypropane (NK Ester 701. Shin-Nakamura Chemical Co., Ltd) | 37 | 0.6 |
| 1,4-Butanediol dimethacrylate (BD, Shin-Nakemura Chemical Co., Ltd) | 7 | 2.0 |

| Polyfunctional Monomer | | |
|---|---|---|
| Material Name | Viscosity (mPa•s) | PII |
| Trimethylolpropane trimethacrylate (NK Ester TMPT, Shln-Nakamura Chemical Co., Ltd.) | 42 | 0.8 |
| Trimethylolpropane-modified triacrylate (Viscoat # 360, Osaka Organic Chemical Industry Ltd.) | 55 | 1.5 |
| Trimethylpropane PO-modified triacrylate (New Frontier TMP-3P, Dal-lchi Kogyo Seiyaku Co., Ltd.) | 60 | 0.1 |
| Glycerin PO-modified triacrylate (Viscoat#GPT, Osaka Organic Chemical Industry Ltd.) | 75 | 0.8 |

In the Table above, the viscosity is the measured value at 25°C.

In the ink compositions A and/or B of the ink set of the present invention, a polymerization accelerator may be contained.
The polymerization accelerator is not particularly limited, but examples thereof include Darocur EHA and EDB (produced by Ciba Specialty Chemicals K.K.).

The ink composition A or B of the ink set of the present invention preferably contains a thermal radical polymerization inhibitor. By virtue of this inhibitor, the storage stability of the ink composition is improved. Examples of the thermal radical polymerization inhibitor include Irgastab UV-10 (produced by Ciba Specialty Chemicals K.K.).

In the ink compositions A and/or B for use in the present invention, a surfactant can be used and, for example, as the silicone-based surfactant, a polyester-modified silicone or a polyether-modified silicone is preferred, and a polyether-modified polydimethylsiloxane or a polyester-modified polydimethylsiloxane is more preferred. Specific examples thereof include BYK-347, BYK-348, BYK-UV3500, 3510, 3530 and 3570 (produced by BYK-Chemie Japan K.K.).

The ink set of the present invention may contain a coloring material in the ink compositions A and/or B.
In this case, the coloring material used may be either a dye or a pigment, but a pigment is more advantageous in view of durability of the printed matter.
As for the dye used in the present invention, various dyes usually employed for inkjet recording, such as direct dye, acidic dye, food dye, basic dye, reactive dye, disperse dye, vat dye, soluble vat dye and reactive disperse dye, may be used.

As for the pigment used in the present invention, an inorganic pigment and an organic pigment can be used without any particular limitation.
With respect to the inorganic pigment, carbon black produced by a known process such as contact process, furnace process and thermal process can be used in addition to titanium oxide and iron oxide. With respect to the organic pigment, there may be used an azo pigment (including an azo lake, an insoluble azo pigment, a condensed azo pigment, a chelate azo pigment and the like), a polycyclic pigment (e.g., phthalocyanine pigment, perylene pigment, perynone pigment, anthraquinone pigment, quinacridone pigment, dioxazine pigment, thioindigo pigment, isoindolinone pigment, quinophthalone pigment), a dye chelate (e.g., basic dye type chelate, acid dye type chelate), a nitro pigment, a nitroso pigment, aniline black and the like.

Specific examples of the pigment include, as carbon black, C.I. Pigment Black 7; No. 2300, No. 900, MCF88, No. 33, No. 40, No. 45, No. 52, MA7, MA8, MA100 and No. 2200B produced by Mitsubishi Chemical Corp.; Raven 5750, Raven 5250, Raven 5000, Raven 3500, Raven 1255 and Raven 700 produced by Columbia; Regal 400R, Regal 330R, Regal 660R, Mogul L, Mogul 700, Monarch 800, Monarch 880, Monarch 900, Monarch 1000, Monarch 1100, Monarch 1300 and Monarch 1400 produced by Cabot; and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A and Special Black 4 produced by Degussa.

Examples of the pigment used in the yellow ink include C.I. Pigment Yellow 1, 2, 3, 12, 13, 14, 16, 17, 73, 74, 75, 83, 93, 95, 97, 98, 109, 110, 114, 120, 128, 129, 138, 150, 151, 154, 155, 180, 185 and 213.
Examples of the pigment used in the magenta ink includes C.I. Pigment Red 5, 7, 12, 48(Ca), 48(Mn), 57(Ca), 57:1, 112, 7.22, 123, 168, 184, 202 and 209, and C.I. Pigment Violet 19.

Examples of the pigment used in the cyan ink include C.I. Pigment Blue 1, 2, 3, 15:3, 15:4, 60, 16 and 22.
According to a preferred embodiment of the present invention, the average particle diameter of the pigment is preferably from 10 to 200 nm, more preferably from 50 to 150 nm. The amount of the coloring material added in the ink composition is preferably on the order of 0.1 to 25 mass%, more preferably on the order of 0.5 to 15 mass%.

According to a preferred embodiment of the present invention, such a pigment may be used as a pigment liquid dispersion by dispersing it in an aqueous medium with use of a dispersant or a surfactant, and the obtained pigment liquid dispersion may be contained in the ink composition A or B.
As for the preferred dispersant, a dispersant conventionally used for preparing a pigment liquid dispersion, such as polymer dispersant, can be used.

In the case where the ink composition contains a coloring material, a plurality of coloring material-containing ink compositions may be used for each color.
For example, in the case of adding a dark or light color of the same series for each color in addition to the basic four colors of yellow, magenta, cyan and black, there may be used light magenta (light color) or red (dark color) in addition to magenta, light cyan (light color) or blue (dark color) in addition to cyan, and gray or light black (light color) or mat black (dark color) in addition to black.

Also, in the ink compositions A and/or B of the present invention, other conventionally known and employed components which can be used in the ink, such as wetting agent, penetrating solvent, pH adjusting agent, antiseptic and antifungal, may be added.
If desired, a leveling additive, a matting agent, and a polyester-based resin, polyurethane-based resin, vinyl-based resin, acrylic resin, rubber-based resin or waxes for adjusting the film physical properties may be added.
Also, in the case where the ink composition A or B for use in the present invention is used in the inkjet recording method, the viscosity of each ink composition is preferably 10 mPa•s or less at 25°C in view of handling in use.

In the case where the ink set of the present invention is a photocurable ink set, the curing reaction is preformed by irradiating light after mixing the ink compositions A and B. The mixing may be performed either before or after printing as long as it is before the curing reaction. In other words, the mixing and printing may be performed in a mode where the ink composition A and the ink composition B are attached to the same position on a recording medium, or a mode where the ink composition A and the ink composition B are mixed and then attached onto a recording medium.

In the case where the ink set is a photocurable ink set, the inkjet recording method using the ink set of the present invention is a method of ejecting the ink composition on a recording medium and then irradiating an ultraviolet ray.
The irradiation light source is not particularly limited but is preferably an irradiation light source which emits light at a wavelength of 350 to 450 nm.
The irradiation dose of ultraviolet ray is from 10 to 20,000 mJ/cm², preferably from 50 to 15,000 mJ/cm². When the irradiation dose of ultraviolet ray is within such a range, the curing reaction can be sufficiently performed.
The ink set of the present invention is an ink set where when the irradiation is performed under the above-described conditions, the inks each is not curable by itself but are curable when being mixed.

The ultraviolet irradiation means includes a lamp such as metal halide lamp, xenon lamp, carbon arc lamp, chemical lamp, low-pressure mercury lamp and high-pressure mercury lamp. A commercially available lamp such as H Lamp, D Lamp and V Lamp manufactured by Fusion System may be used.
Furthermore, the ultraviolet irradiation can also be performed using an ultraviolet light-emitting semiconductor device such as ultraviolet light-emitting diode (ultraviolet LED) and ultraviolet light-emitting semiconductor laser.

In the present invention, the ink composition other than the ink compositions A and B, contained in the ink set, may have the same composition as the ink composition A or B.

### EXAMPLES

The present invention will be illustrated in greater detail with reference to the following Examples, but the invention should not be construed as being limited thereto. Examples 1 to 16 and Comparative Examples 1 to 4
In Examples, as for the polymerizable compound contained in the ink composition B, "STAR-501" and "Viscoat #1000" produced by Osaka Organic Chemical Industry, Ltd. were used as the hyperbranched polymer. "STAR-501" and "Viscoat #1000" are a hyperbranched polymer obtained by branching functional groups from dipentaerythritol serving as a core. "STAR-501" contains dipentaerythritol hexaacrylate as a diluent monomer and has a viscosity of 210 Pa•s and a functional group number of 20 to 99 (acryl group), and "Viscoat #1000" contains ethylene glycol diacrylate as a diluent monomer and has a viscosity of 273 mPa•s and a functional group number of 14 (acryl group).

As for the dendrimer, Dendrimer 7 synthesized as follows was blended in Examples 13 to 16. Synthesis of Dendrimer 7
In a 1 liter-volume reaction vessel, 31 g of ethylenediamine, 256 g of dimethyl acrylate and 300 g of methanol were charged, and the reaction was allowed to proceed for 6 hours while stirring at 40°C under a nitrogen stream. After the completion of reaction, the obtained mixture was subjected to removal of methanol by distillation in a rotary evaporator, then added to a large excess of diethyl ether and purified by a reprecipitation operation. Subsequently, 500 g of methanol was added to the obtained Reaction Product 1 and dissolved, and the next reaction was allowed to proceed. A methanol solution containing Reaction Product 1 was charged into a 2 liter-volume reaction vessel, 240 g of ethylenediamine was added thereto, and the reaction was allowed to proceed for 6 hours while stirring at 27°C under a nitrogen stream.
After the reaction, removal of methanol and purification by a reprecipitation operation were performed in the same manner, 1,000 g of methanol was added to the obtained Reaction Product 2 and dissolved, and the next reaction was allowed to proceed. A methanol solution containing Reaction Product 2 was charged into a 5 liter-volume reaction vessel, 667 g of dimethyl acrylate was added, and the reaction was allowed to proceed for 6 hours while stirring at 40°C under a nitrogen stream. After the reaction, removal of methanol and purification by a reprecipitation operation were performed in the same manner, 2,000 g of methanol was added to the obtained Reaction Product 3 and dissolved, and the next reaction was allowed to proceed. A methanol solution containing Reaction Product 3 was charged into a reaction vessel, 361 g of ethylenediamine was added, and the reaction was allowed to proceed for 6 hours while stirring at 27°C under a nitrogen stream. After the reaction, removal of methanol and purification by a reprecipitation operation were performed in the same manner, 2,000 g of acetone subjected to a dehydration treatment using a molecular sieve was added to the obtained Reaction Product 4 and dissolved, and the next reaction was allowed to proceed. Thereafter, 1,000 g of an acetone solution containing Reaction Product 4 was divided in a reaction vessel, 2,153 g of KARENZ BEI (1,1-bis(acryloyloxymethyl)ethyl isocyanate, produced by Showa Denko K.K.) was added and mixed with stirring under a nitrogen stream, 1 g of DABCO (1,4-diazabicyclo[2,2,2]octane, produced by Tokyo Kasei Kogyo Co., Ltd.) was further added and mixed with stirring, and after elevating the reaction temperature to 50°C. the reaction was allowed to proceed for 6 hours. After the completion of reaction, acetone was removed by distillation in a rotary evaporator, and 6,838 g of ethylene glycol monoallyl ether was added, whereby Ethylene Glycol Monoallyl Ether Solution 8 of Dendrimer 7 in a concentration of 30 wt% was prepared. In this case, the number of acryloyl groups located on the outermost surface per molecule of Dendrimer 7 was 72.

Preparation of Pigment Liquid Dispersion
The pigment liquid dispersion was prepared by the following method.
Allyl glycol (produced by Nippon Nyukazai Co., Ltd.) as the monomer was added to 15 parts of C.I. Pigment Black 7 (carbon black) as the colorant and 3.5 parts of Discol N-509 (produced by Dainichiseika Color & Chemicals Mfg. Co., Ltd.) as the dispersant to make 100 parts in total, and these were mixed with stirring to form a mixture.
This mixture was dispersed together with zirconia beads (diameter: 1.5 mm) for 6 hours by using a sand mill (manufactured by Yasukawa Seisakusho).
Thereafter, zirconia beads were separated by a separator to obtain a black pigment liquid dispersion.

Pigment liquid dispersions corresponding to respective colors, that is, Cyan Pigment Liquid Dispersion 4 (C.I. Pigment Blue 15:3), magenta pigment liquid dispersion (C.I. Pigment Violet 19) and yellow pigment liquid dispersion (C.I. Pigment Yellow 155), were prepared in the same manner.

Preparation of Ink Composition A and Ink Composition B
An ink composition A and an ink composition B were prepared according to the formulations shown below. That is, the polymerizable compound, photoradical polymerization initiator and dispersant were mixed and completely dissolved to prepare an ink composition A, and the pigment liquid dispersion prepared above was gradually added dropwise to the ink solvent of the ink composition A while stirring. After the completion of dropwise addition, these were mixed with stirring at ordinary temperature for 1 hour to obtain an ink composition A. Subsequently, the polymerizable compound and photoradical polymerizable compound were mixed and completely dissolved to prepare an ink composition B. Thereafter, the ink compositions A and B each was filtered through a 5-µm membrane filter to complete the desired ink composition.

**Table 2**

| | Example 1 | | Example 2 | | Example 3 | | Example 4 | |
|---|---|---|---|---|---|---|---|---|
| | A | B | A | B | A | B | A | B |
| Allyl Glycol | 87.6 | 70 | 87.6 | 70 | 87.2 | 70 | 87.8 | 70 |
| Hyperbranched polymer (STAR-501) | | 30 | | 30 | | 30 | | 30 |
| Irgacure 819 | 4 | | 4 | | 4 | | 4 | |
| Irgacure 127 | 1 | | 1 | | 1 | | 1 | |
| Pigment Black 7 | 6 | | | | | | | |
| Pigment Blue 15:3 | | | 6 | | | | | |
| Pigment Violet 19 | | | | | 6 | | | |
| Pigment Yellow 155 | | | | | | | 6 | |
| Dispersant (polyoxy-alkylenepoly-alkylenepolyamine) | 1.4 | | 1.4 | | 1.8 | | 1.2 | |

| | Example 5 | | Example 6 | | Example 7 | | Example 8 | |
|---|---|---|---|---|---|---|---|---|
| | A | B | A | B | A | B | A | B |
| Allyl Glycol | 87.6 | 70 | 87.6 | 70 | 87.2 | 70 | 87.8 | 70 |
| Viscoat #1000 | | 30 | | 30 | | 30 | | 30 |
| Irgacure 819 | 4 | | 4 | | 4 | | 4 | |
| Irgacure 127 | 1 | | 1 | | 1 | | 1 | |
| Pigment Black 7 | 6 | | | | | | | |
| Pigment Blue 15:3 | | | 6 | | | | | |
| Pigment Violet 19 | | | | | 6 | | | |
| Pigment Yellow 151 | | | | | | | 6 | |
| Dispersant (polyoxy-alkylenepoly-alkylenepolyamine) | 1.4 | | 1.4 | | 1.8 | | 1.2 | |

| | Example 9 | | Example 10 | | Example 11 | | Example 12 | |
|---|---|---|---|---|---|---|---|---|
| | A | B | A | B | A | B | A | B |
| Allyl Glycol | 47.6 | 50 | 47.6 | 50 | 47.2 | 50 | 47.8 | 50 |
| Trimethylolpropane diallyl ether | 40 | 20 | 40 | 20 | 40 | 20 | 40 | 20 |
| Viscoat #1000 | | 30 | | 30 | | 30 | | 30 |
| Irgacure 819 | 4 | | 4 | | 4 | | 4 | |
| Irgacure 127 | 1 | | 1 | | 1 | | 1 | |
| Pigment Black 7 | 6 | | | | | | | |
| Pigment Blue 15:3 | | | 6 | | | | | |
| Pigment Violet 19 | | | | | 6 | | | |
| Pigment Yellow 151 | | | | | | | 6 | |
| Dispersant (polyoxy-alkylenepoly-alkylenepolyamine) | 1.4 | | 1.4 | | 1.8 | | 1.2 | |

| | Example 13 | | Example 14 | | Example 15 | | Example 16 | |
|---|---|---|---|---|---|---|---|---|
| | A | B | A | B | A | B | A | B |
| Allyl glycol | 87.6 | 70 | 87.6 | 70 | 87.2 | 70 | 87.8 | 70 |
| Dendrimer 7 | | 30 | | 30 | | 30 | | 30 |
| Irgacure 819 | 4 | | 4 | | 4 | | 4 | |
| Irgacure 127 | 1 | | 1 | | 1 | | 1 | |
| Pigment Black 7 | 6 | | | | | | | |
| Pigment Blue 15:3 | | | 6 | | | | | |
| Pigment Violet 19 | | | | | 6 | | | |
| Pigment Yellow 155 | | | | | | | 6 | |
| Dispersant (polyoxy-alkylenepoly-alkylenepolyamine) | 1.4 | | 1.4 | | 1.8 | | 1.2 | |

As for Comparative Examples, ink compositions were prepared according to the formulations (mass%) shown in Table 3 in the same manner as the ink compositions A and B above.

**Table 3**

| | Comparative Example 1 | | Comparative Example 2 | | Comparative Example 3 | | Comparative Example 4 | |
|---|---|---|---|---|---|---|---|---|
| | A | B | A | B | A | B | A | B |
| Allyl glycol | | 70 | | 70 | | 70 | | 70 |
| Isobornyl acrylate | 87.6 | 30 | 87.6 | 30 | 87.2 | 30 | 87.8 | 30 |
| Irgacure 819 | 4 | | 4 | | 4 | | 4 | |
| Irgacure 127 | 1 | | 1 | | 1 | | 1 | |
| Pigment Black 7 | 6 | | | | | | | |
| Pigment Blue 15:3 | | | 6 | | | | | |
| Pigment Violet 19 | | | | | 6 | | | |
| Pigment Yellow 155 | | | | | | | 6 | |
| Dispersant (polyoxy-alkylenepolyalkylenepolyamine) | 1.4 | | 1.4 | | 1.8 | | 1.2 | |

### Storage Stability Test

The ink compositions A and B of each of the ink sets of Examples and Comparative Examples were left standing under an environment of 60°C × 7 days, and the initial viscosity (mPa•s) and the viscosity after standing were measured by a rheometer (MCR300, manufactured by Physica). The viscosity change rate was evaluated according to the following criteria. The results are shown in Tables 4 and 5.

AA: The change rate between the initial viscosity and the viscosity after standing was less than ±5%.
A+: The change rate between the initial viscosity and the viscosity after standing was from ±5% to less than ±9%.
A-: The change rate between the initial viscosity and the viscosity after standing was from ±9% to less than 12.5%.
B: The change rate between the initial viscosity and the viscosity after standing was ±12.5% or more.

With respect to the ink compositions A and B of each of the ink sets of Examples and Comparative Examples, while an ultraviolet ray used in the curing process was slightly leaked by reflection or the like and irradiated on a supply tube until the ink was filled into a head, the state of the ink in the supply tube was observed after printing for 3 hours and evaluated according to the following criteria. The results are shown in Tables 4 and 5.

A: The ink was present in the supply tube without being cured.
B: A gelled product of the ink was observed in the supply tube.

### Curability Test

The ink compositions A and B of each ink set above were dropped on the same position on a glass substrate and mixed, and an ultraviolet ray at a wavelength of 365 nm was irradiated thereon under the conditions of an irradiation intensity of 17 mW/cm², an irradiation time of 6 seconds and an integrated light quantity of 102 mJ/cm², thereby curing the ink composition. Incidentally, the ink compositions of Comparative Example were directly dropped on a glass substrate and subjected to the ultraviolet irradiation/curing treatment.
Also, using an inkjet printer, PX-G900, manufactured by Seiko Epson Corp., the ink compositions A and B in each of Examples above were filled in separate nozzle lines, and a solid pattern was printed on a PC sheet (Panlite Sheet, produced by Teijin Chemicals Ltd.) at ordinary temperature/atmospheric pressure under the conditions that respective ink droplets are simultaneously landed on the same position. At this time, printing and curing were simultaneously performed using an irradiation device disposed at the paper discharge port by irradiating an ultraviolet ray at a wavelength of 365 nm under the curing conditions of an irradiation intensity of 17 mW/cm², an irradiation time of 6 seconds and an integrated light quantity of 102 mJ/cm².
In all samples, the surface state and the like were evaluated with an eye according to the following criteria. The results are shown in Tables 4 and 5.

A: The surface did not get scratched when rubbed with a nail.
B: The surface got scratched when rubbed with a nail.

**Table 4**

| | Example 1 | | Example 2 | | Example 3 | | Example 4 | |
|---|---|---|---|---|---|---|---|---|
| | A | B | A | B | A | B | A | B |
| Evaluation of storage stability (60°C×7 days) | AA | A+ | AA | A+ | AA | A+ | AA | A+ |
| Evaluation of storage stability in flow path | A | A | A | A | A | A | A | A |
| Evaluation of curability (printing by a printer) | A | | A | | A | | A | |

| | Example 5 | | Example 6 | | Example 7 | | Example 8 | |
|---|---|---|---|---|---|---|---|---|
| | A | B | A | B | A | B | A | B |
| Evaluation of storage stability (60°C×7 days) | AA | A+ | AA | A+ | AA | A+ | AA | A+ |
| Evaluation of storage stability in flow path | A | A | A | A | A | A | A | A |
| Evaluation of curability (printing by a printer) | A | | A | | A | | A | |

| | Example 9 | | Example 10 | | Example 11 | | Example 12 | |
|---|---|---|---|---|---|---|---|---|
| | A | B | A | B | A | B | A | B |
| Evaluation of storage stability (60°C×7 days) | AA | A+ | AA | A+ | AA | A+ | AA | A+ |
| Evaluation of storage stability in flow path | A | A | A | A | A | A | A | A |
| Evaluation of curability (printing by a printer) | A | | A | | A | | A | |

| | Example 13 | | Example 14 | | Example 15 | | Example 16 | |
|---|---|---|---|---|---|---|---|---|
| | A | B | A | B | A | B | A | B |
| Evaluation of storage stability (60°C×7 days) | AA | A- | AA | A- | AA | A- | AA | A- |
| Evaluation of storage stability in flow path | A | A | A | A | A | A | A | A |
| Evaluation of curability (printing by a printer) | A | | A | | A | | A | |

**Table 5**

| | Comparative Example 1 | | Comparative Example 2 | | Comparative Example 3 | | Comparative Example 4 | |
|---|---|---|---|---|---|---|---|---|
| | A | B | A | B | A | B | A | B |
| Evaluation of storage stability (60°C×7 days) | B | A | B | A | B | A | B | A |
| Evaluation of storage stability in flow path | B | A | B | A | B | A | B | A |
| Evaluation of curability (printing by a printer) | B | | B | | B | | B | |

As apparent from Tables 4 and 5, in the Examples of the present invention, satisfactory results are obtained in the evaluation of storage stability and curability, and the ink compositions of the ink set each is sufficiently usable.

While the present invention has been described in detail and with reference to specific embodiments thereof, it will be apparent to one skilled in the art that various changes and modifications can be made therein without departing from the spirit and scope thereof.

This application is based on Japanese Patent Application Nos. 2006-298601 (filed November 2, 2006) and 2007-167252 (filed June 26, 2007), the contents thereof are herein incorporated by reference.

## Claims

1. An ink set comprising a plurality of ink compositions including:
an ink composition A containing at least a polymerizable compound and a photopolymerization initiator; and
an ink composition B containing at least a polymerizable compound,
wherein each ink composition is not curable by itself.

2. The ink set as claimed in claim 1, wherein the ink composition B contains no photopolymerization initiator.

3. The ink set as claimed in claim 1 or 2, wherein the polymerizable compound contained in the ink composition A and the polymerizable compound contained in the ink composition B are copolymerizable with each other.

4. The ink set as claimed in any one of claims 1 to 3, wherein the polymerizable compound contained in the ink composition A is not polymerizable in the presence of the photopolymerization initiator.

5. The ink set as claimed in any one of claims 1 to 4, wherein the polymerizable compounds are radically polymerizable.

6. The ink set as claimed in claim 4 or 5, wherein the polymerizable compound contained in the ink composition A is an allyl group-containing compound.

7. The ink set as claimed in claim 6, wherein the polymerizable compound contained in the ink composition A comprises allyl glycol and/or trimethylolpropane diallyl ether.

8. The ink set as claimed in any one of claims 1 to 7, wherein the polymerizable compound contained in the ink composition B contains a dendritic polymer.

9. The ink set as claimed in claim 8, wherein the dendritic polymer is a hyperbranched polymer and/or a dendrimer.

10. The ink set as claimed in any one of claims 1 to 9, wherein at least either one of said ink composition A and said ink composition B contains a coloring material.

11. A recording method using the ink set claimed in any one of claims 1 to 10.
